# EUROPÄISCHE PATENTANMELDUNG

(11) **EP 0 666 266 A1**
(43) Veröffentlichungstag der Anmeldung: **09.08.1995**
(21) Anmeldenummer: 95100080.1
(22) Anmeldetag: 04.01.1995
(51) Int. Cl.: C07F 9/6574

(54) **Verfahren zur Herstellung von Trismethylolalkanphosphit**

(30) Priorität: 08.02.1994 DE 4403892
(71) Anmelder: HOECHST AKTIENGESELLSCHAFT, 65926 Frankfurt am Main (DE)
(72) Erfinder: Weferling, Norbert, Dr., D-50354 Hürth (DE); Kolbe, Günter, D-50354 Hürth (DE)

(57) **Zusammenfassung**

Beim Verfahren zur Herstellung von Trismethylolalkanphosphit durch Umsetzung von Phosphortrichlorid mit einem 1,1,1-Trismethylolalkan wird die Umsetzung in Abwesenheit eines Halogenwasserstoffakzeptors durch direktes Absieden des entstehenden Chlorwasserstoffs, ggf. in einem inerten Lösemittel, vorgenommen.

## Beschreibung

Trismethylolpropanphosphit (4-Ethyl-2,6,7-trioxa-1-phosphabicyclo[2.2.2]octan, 1,1,1-Tris-hydroxymethylpropanphosphit, CAS Nr.: 824-11-3) ist als Ausgangsprodukt zur Herstellung von cyclischen Phosphonsäureestern bekannt, die als wirksame Flammschutzmittel insbesondere für Polyester, aber auch für andere technische Thermoplasten beschrieben sind (vgl. DE-C2-22 55 971 = US-PS 3,789,091 und 3,849,368) . Um diese zu erhalten, wird Trismethylolpropanphosphit mit Dimethyl-methylphosphonat ggf. unter Zusatz von Katalysatoren bei 180 - 225 °C umgesetzt. Es resultiert ein Gemisch aus im wesentlichen einem Di- und einem Triphosphonsäureester, das unter den Handelsnamen ®Antiblaze 19, ®Amgard CU sowie ®Antiblaze 1045 (Albright & Wilson) sowie ®Hostaflam 0P 91o (Hoechst AG) kommerziell erhältlich ist: 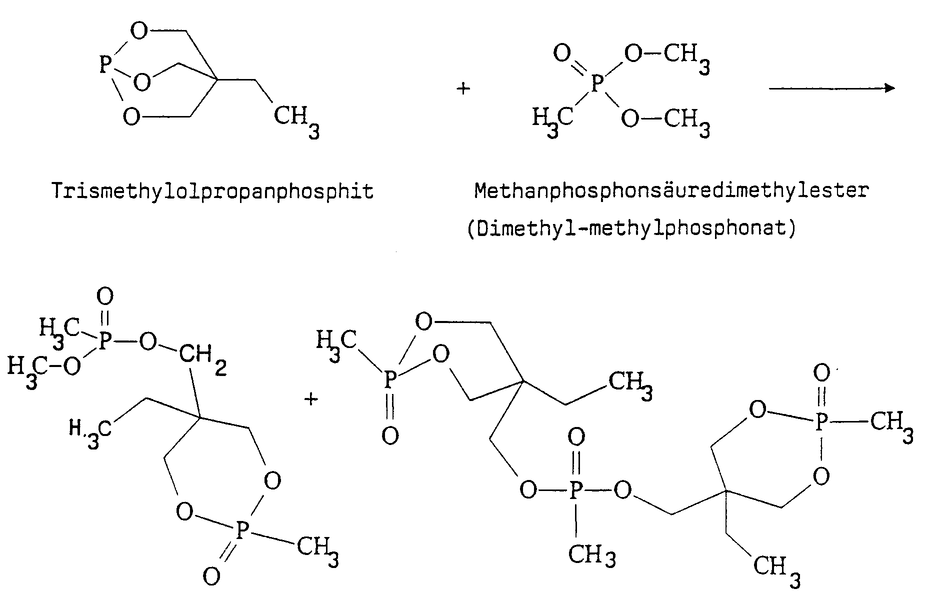
Dieses Gemisch kann als wäßrige Lösung, ggf. in Verbindung mit anderen bei der Textilausrüstung benötigten Stoffen mit Hilfe bekannter Techniken wie z.B. durch Foulardieren und anschließendem Thermosolieren dauerhaft auf der Polyesterfaser fixiert werden. Da das Flammschutzmittel nur in die oberen Schichten der Faser migriert, werden nur relativ geringe Mengen für eine wirksame Flammschutzausrüstung benötigt.

Trismethylolpropanphosphit ist kommerziell nicht erhältlich, sondern es wird in einer der oben beschriebenen Reaktion vorgelagerten Umsetzung erzeugt. Nach dem Stand der Technik wird dazu eine Umesterung von Trialkylphosphiten mit 1,1,1-Trismethylolpropan (1,1,1-Tris-hydroxymethylpropan) gemäß folgender Gleichung bevorzugt: 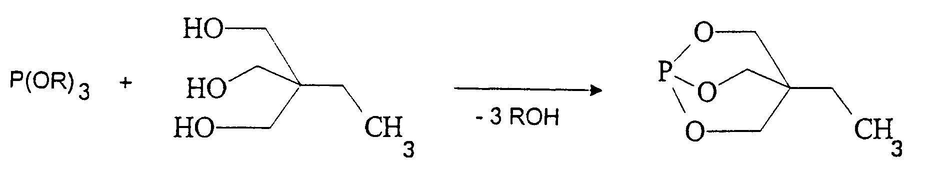
Aus Kostengründen und wegen der höheren Reaktivität wird zur Herstellung des o.g. Flammschutzmittels ausschließlich Trimethylphosphit verwendet. Nachteilig bei diesem Verfahren ist insbesondere der Anfall des Nebenprodukts Methanol, das aus dem Reaktionsgemisch destillativ abgetrennt werden muß. Wegen des anhaftenden Trimethylphosphits, das selbst in Spuren noch äußerst geruchsintensiv ist, kann dieses Koppelprodukt nur noch einer thermischen Verwertung zugeführt werden. Bei der Herstellung von 1 t Flammschutzmittel werden so ca. 300 kg Methanol als Nebenprodukt erzeugt, das entsorgt werden muß (vgl. Houben-Weyl, Methoden der Organischen Chemie, Band 12/2 (1964), S. 78).

Nach allgemein akzeptiertem Kenntnisstand wird zwar bei der Umsetzung von PCl₃ mit Alkoholen auch der Tri-Ester, also das Phosphit gebildet; durch den gleichzeitig entstehenden Chlorwasserstoff wird aber sofort eine der P-OR-Bindungen unter Bildung von Alkylchlorid und dem sekundären Phosphit gespalten (vgl. G.M. Kosolapoff und L. Maier, Organic Phosphorus Compounds, Vol. 5, Chapter 13, S. 23-37, besonders S. 24 oben und S. 25 unten; Houben-Weyl, loc. cit., S. 53-59):

P(OR)₃ + HCl => RCl + (RO)₂P(=O)H

Ohne Zusatz eines Chlorwasserstoffakzeptors, in der Regel Pyridin oder Triethylamin, waren Trialkylphosphite nicht erhältlich (vgl. G.M. Kosolapoff und L. Maier, loc. cit., S. 32-33). Der Basenzusatz hat zur Folge, daß die entsprechenden Hydrochloride als in der Regel feste Nebenprodukte vom Reaktionsgemisch abgetrennt und gesondert aufgearbeitet werden mußten.

Aber selbst unter den o.g. Prozeßbedingungen ist die Herstellung von Trialkylphosphiten nicht in jedem Fall erfolgreich. So wird in Houben-Weyl, loc. cit., S. 57, die Synthese von 1,1,1-Tris-hydroxymethylethanphosphit, einem bicyclischen, dem Trismethylolpropanphosphit äußerst ähnlichen Molekül, durch Umsetzung von PCl₃ mit 1,1,1-Trishydroxymethylethan in Gegenwart von Pyridin beschrieben, die mit einer für technische Reaktionen völlig unzureichenden Ausbeute von nur 40 % verläuft. 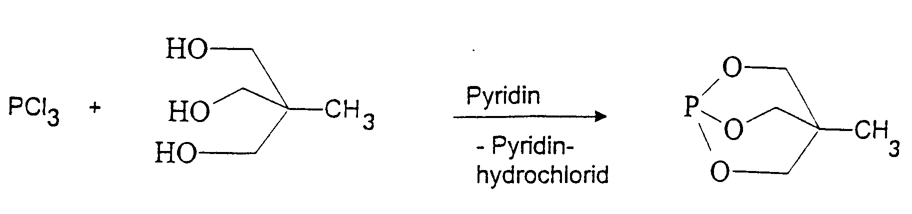
Überraschenderweise wurde nun gefunden, daß das Trismethylolpropanphosphit in sehr guter Ausbeute und Reinheit durch direkte Umsetzung von Trismethylolpropan mit Phosphortrichlorid ohne Zusatz eines Halogenwasserstoff-Akzeptors hergestellt werden kann. Die Reaktion wird bei niedrigen Temperaturen (0 - 30 °C) durch Umsetzung von PCl₃ mit Trismethylolpropan in einem inerten Lösemittel durchgeführt. Das Lösemittel kann z.B. ein halogenierter Kohlenwasserstoff wie Dichlormethan sein, bevorzugt wird jedoch ein aliphatischer, aromatischer oder araliphatischer Kohlenwasserstoff wie Toluol eingesetzt.

Zur Durchführung der Reaktion kann so vorgegangen werden, daß das Phosphortrichlorid, gelöst in einem inerten Lösemittel, vorgelegt und das Trismethylolpropan entweder in Form einer Schmelze (> 60 °C) oder in fester Form über eine geeignete Dosiereinrichtung in den auf Raumtemperatur-Niveau oder tiefer befindlichen Reaktor eingetragen wird. Es hat sich aber als ausbeutesteigernd herausgestellt, wenn Phosphortrichlorid in eine Suspension von Trismethylolpropan und dem Lösemittel zudosiert wird. Im Prinzip ist sogar der völlige Verzicht auf ein Lösemittel möglich, allerdings entsteht dann gegen Ende der Umsetzung ein schwer rührbarer Niederschlag von auskristallisiertem Trismethylolpropanphosphit, so daß die Verwendung eines Lösemittels bevorzugt wird.

Die sofort nach Beginn der PCl₃-Dosierung einsetzende HCl-Entwicklung bewirkt nach einer kurzen exothermen Induktionsphase eine erwünschte Kühlung der Reaktionsmischung. Die Reaktion kann so schnell durchgeführt werden, wie die sichere Abführung der entstehenden HCl-Menge möglich ist. Die Reaktion ist praktisch mit der Beendigung der PCl₃-Dosierung abgeschlosen, so daß unmittelbar anschließend mit der Aufarbeitung des Rohproduktes begonnen werden kann: Das als Leichtsieder anfallende Lösemittel kann vollständig zurückgewonnen werden. Aus dem verbleibenden Rohprodukt wird das Trismethylolpropanphosphit im Vakuum destillativ abgetrennt. Der in geringer Menge verbleibende flüssige Destillationsrückstand kann in einer geeigneten Verbrennungsanlage entsorgt werden.

Im einzelnen betrifft die Erfindung nunmehr ein Verfahren zur Herstellung von Trismethylolalkanphosphit durch Umsetzung von Phosphortrichlorid mit einem 1,1,1-Trismethylolalkan, wobei die Umsetzung in Abwesenheit eines Halogenwasserstoffakzeptors durch direktes Absieden des entstehenden Chlorwasserstoffs vorgenommen wird.

Darüberhinaus kann das Verfahren der Erfindung bevorzugt und wahlweise noch dadurch gekennzeichnet sein, daß
a) die Umsetzung bei 0 bis 30 °C vorgenommen wird,
b) die Umsetzung in einem inerten Lösemittel vorgenommen wird;
c) als Lösemittel ein aliphatischer, aromatischer oder araliphatischer, ggf. halogenierter, Kohlenwasserstoff eingesetzt wird;
d) als Lösemittel Toluol oder Dichlormethan eingesetzt wird,
e) das Phosphortrichlorid im inerten Lösemittel gelöst in der Reaktionszone vorgelegt wird und 1,1,1-Trismethylolalkan als Schmelze oder in fester Form über eine Dosiereinrichtung im Verlauf von 0,5 bis 2 Stunden in die Reaktionszone eingetragen wird,
f) das Phosphortrichlorid in eine Suspension von 1,1,1-Trismethylolalkan im inerten Lösemittel im Verlauf von 0,2 bis 3 Stunden zugetropft wird,
g) der entstehende Chlorwasserstoff laufend abgezogen, nach Beendigung der Reaktion das inerte Lösemittel unter Normaldruck abdestilliert und zurückgewonnen und schließlich das gebildete Trismethylolalkanphosphit im Vakuum abdestilliert wird,
h) als 1,1,1-Trismethylolalkan das 1,1,1-Trismethylolethan oder -propan eingesetzt wird.

### Beispiel

141 g (1,05 mol) Trismethylolpropan, suspendiert in 250 ml wasserfreiem Toluol, wurden bei 22 °C in einem mit Thermometer, Rückflußkühler und mechanischem Rührer ausgerüsteten Kolben vorgelegt. Innerhalb von 150 min. wurden 137,5 g (1 mol) Phosphortrichlorid (PCl₃) zugetropft, wobei eine lebhafte HCl-Entwicklung erfolgte. Die Reaktionstemperatur sank nach einer anfänglichen Erhöhung auf 28 °C allmählich bis auf 10 °C ab:

| Zeit (min): | Temperatur (°C): |
|---|---|
| 10 | 28 |
| 20 | 27 |
| 30 | 23 |
| 60 | 18 |
| 120 | 15 |
| 150 | 10 |
| 180 | 22 |

Nach 150 minütigem Zutropfen von PCl₃ wurden noch weitere 8 g PCl₃ zugegeben und dann 30 min lang weitergerührt (Nachreaktion) . Anschließend wurde das Toluol unter Normaldruck abdestilliert, wovon 98 % zurückgewonnen wurden. Danach wurde bei einer Kopftemperatur von etwa 150 °C und einem Druck von 14 mbar reines Trismethylolpropanphosphit abdestilliert. Die Ausbeute betrug 91,4 % d. Th..

## Patentansprüche

1. Verfahren zur Herstellung von Trismethylolalkanphosphit durch Umsetzung von Phosphortrichlorid mit einem 1,1,1-Trismethylolalkan, dadurch gekennzeichnet, daß die Umsetzung in Abwesenheit eines Halogenwasserstoffakzeptors durch direktes Absieden des entstehenden Chlorwasserstoffs vorgenommen wird.

2. Verfahren nach Anspruch 1, dadurch gekennzeichnet, daß die Umsetzung bei 0 bis 30 °C vorgenommen wird.

3. Verfahren nach Anspruch 1 oder 2, dadurch gekennzeichnet, daß die Umsetzung in einem inerten Lösemittel vorgenommen wird.

4. Verfahren nach Anspruch 3, dadurch gekennzeichnet, daß als Lösemittel ein aliphatischer, aromatischer oder araliphatischer, ggf. halogenierter, Kohlenwasserstoff eingesetzt wird.

5. Verfahren nach Anspruch 3 oder 4, dadurch gekennzeichnet, daß als Lösemittel Toluol oder Dichlormethan eingesetzt wird.

6. Verfahren nach einem der Ansprüche 3 bis 5, dadurch gekennzeichnet, daß das Phosphortrichlorid im inerten Lösemittel gelöst in der Reaktionszone vorgelegt wird und 1,1,1-Trismethylolalkan als Schmelze oder in fester Form über eine Dosiereinrichtung im Verlauf von 0,5 bis 2 Stunden in die Reaktionszone eingetragen wird.

7. Verfahren nach einem der Ansprüche 3 bis 5, dadurch gekennzeichnet, daß das Phosphortrichlorid in eine Suspension von 1,1,1-Trismethylolalkan im inerten Lösemittel im Verlauf von 0,2 bis 3 Stunden zugetropft wird.

8. Verfahren nach einem der Ansprüche 3 bis 7, dadurch gekennzeichnet, daß der entstehende Chlorwasserstoff laufend abgezogen, nach Beendigung der Reaktion das inerte Lösemittel unter Normaldruck abdestilliert und zurückgewonnen und schließlich das gebildete Trismethylolalkanphosphit im Vakuum abdestilliert wird.

9. Verfahren nach einem der vorhergehenden Ansprüche, dadurch gekennzeichnet, daß als 1,1,1-Trismethylolalkan das 1,1,1-Trismethylolethan oder -propan eingesetzt wird.
